(19) Europäisches Patentamt
European Patent Office
Office européen des brevets

(11) Veröffentlichungsnummer: **0 008 731**
**B1**

(12) **EUROPÄISCHE PATENTSCHRIFT**

(45) Veröffentlichungstag der Patentschrift: **13.05.81**

(21) Anmeldenummer: **79103042.2**

(22) Anmeldetag: **20.08.79**

(51) Int. Cl.³: **C 07 C 145/00, A 01 N 41/12**

(54) **N-sulfenylierte Formanilide, ihre Herstellung und ihre Anwendung als Fungizide.**

(30) Priorität: **06.09.78 DE 2838750**

(43) Veröffentlichungstag der Anmeldung: **19.03.80 Patentblatt 80/6**

(45) Bekanntmachung des Hinweises auf die Patenterteilung: **13.05.81 Patentblatt 81/19**

(84) Benannte Vertragsstaaten: **AT BE CH DE FR GB IT LU NL SE**

(56) Entgegenhaltungen: **FR - A - 1 493 597**

(73) Patentinhaber: **BASF Aktiengesellschaft
Carl-Bosch-Strasse 38
D-6700 Ludwigshafen (DE)**

(72) Erfinder: **Ammermann, Eberhard, Dr.
Sachsenstrasse 3
D-6700 Ludwigshafen (DE)**
Erfinder: **Thym, Sabine, Dr.
Hasenhain 20
D-6900 Heidelberg (DE)**
Erfinder: **Pommer, Ernst-Heinrich, Dr.
Berliner-Platz 7
D-6703 Limburgerhof (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 008 731 B1

N-sulfenylierte Formanilide, ihre Herstellung und ihre Anwendung als Fungizide

Die Erfindung betrifft neue wertvolle N-sulfenylierte Formanilide. Verfahren zu ihrer Herstellung und Fungizide, die diese Verbindungen enthalten.

Es ist bekannt, N-sulfenylierte Imide als Fungizide zu verwenden (Chemical Week, June 21, 1972, S. 46 und 63). Es ist ferner bekannt, N-sulfenylierte Acetanilide als Fungizide zu verwenden. (FR—PS 1493597). Ihre fungizide Wirkung ist jedoch nicht völlig befriedigend.

Es wurde nun gefunden, daß N-sulfenylierte Formanilide der allgemeinen Formel

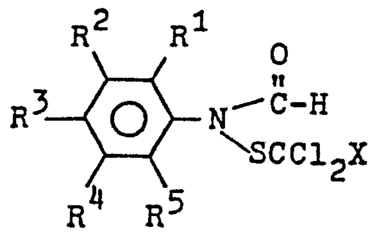

in der

X Fluor oder Chlor und

$R^1$, $R^2$, $R^3$, $R^4$ und $R^5$ unabhängig voneinander Wasserstoff, Halogen, die Nitrogruppe, eine geradkettige oder verzweigte gegebenenfalls halogensubstituierte Alkyl- oder Alkoxygruppe mit 1 bis 4 C-Atomen oder den Rest —CN oder —$COR^6$ bedeuten, wobei $R^6$ einen geraden oder verzweigten Alkoxyrest mit 1 bis 6 C-Atomen oder einen Dialkylaminorest bedeutet, wobei die Alkylreste geradkettig oder verzweigt sein können und aus 1 bis 4 C-Atomen bestehen oder zusammen mit dem Stickstoffatom, dessen Substituenten sie sind, einen Ring bilden oder $R^6$ einen N-Alkyl-, oder N-Arylaminorest bedeutet, wobei der Alkylrest 1 bis 4 C-Atome enthält und der Arylrest gegebenenfalls durch Halogen oder Alkyl substituiert ist, eine gute fungizide Wirkung haben, die der bekannten N-sulfenylierter Imide überlegen ist.

$R^1$, $R^2$, $R^3$, $R^4$ und $R^5$ bedeuten beispielsweise Wasserstoff, Halogen, d.h. Fluor, Chlor, Brom oder Jod; eine geradkettige oder verzweigte gegebenenfalls halogen-substituierte Alkyl- oder Alkoxygruppe mit 1 bis 4 C-Atomen, zum Beispiel Methyl, Äthyl, Propyl, Isopropyl, n-Butyl, iso-Butyl, sek.-Butyl, tert.-Butyl oder Methoxy, Äthoxy, tert.-Butoxy oder Trifluormethyl oder Tetrafluoräthoxy; die Nitrogruppe oder den Rest —CN oder —$COR^6$, wobei $R^6$ einen geradkettigen oder verzweigten Alkoxyrest mit 1 bis 6 C-Atomen beispielsweise den Methoxy-, Äthoxy-, Propoxy-, iso-Propoxy-n-Butoxy-, tert.-Butoxy- oder Hexoxyrest bedeutet oder einen Dialkylaminorest, wobei die Alkylreste geradkettig oder verzweigt sein können und aus 1 bis 4 C-Atome bestehen beispielsweise den N,N-Dimethylamino- oder N,N-Diisopropylamino- oder N-Methyl-, N-tert.-Butylaminorest bedeutet oder die Alkylreste mit dem N-Atom gemeinsam einen gegebenenfalls auch Heteroatome enthaltenden Ring bilden können z.B. den Piperidin- oder Morpholinring oder $R^6$ bedeutet einen N-Alkyl-N-arylaminorest, der gegebenenfalls im Arylring durch Alkylgruppen oder Halogen substituiert sein kann beispielsweise einen N-Methyl-N-(4-Chlorphenyl)-amino- oder N-Äthyl-N-(3-Isopropylphenyl)-aminorest.

Die Herstellung der neuen N-sulfenylierten Formanilide kann beispielsweise in der Weise erfolgen, daß man ein Formanilid der allgemeinen Formel

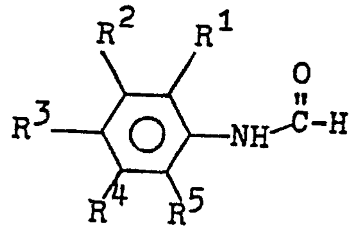

in welcher $R^1$, $R^2$, $R^3$, $R^4$ und $R^5$ die oben angegebenen Bedeutungen haben mit einer Verbindung der Formel $ClSCCl_2X$, in der X Chlor oder Fluor bedeutet, bei einer Temperatur zwischen 0° und 100°C in Gegenwart eines säurebindenden Mittels gegebenenfalls in einem inerten organischen Verdünnungsmittel umsetzt.

Die als Ausgangsmaterialien benötigten Formanilide sind bekannt (Beilstein, Handbuch der organischen Chemie, Band 12, S. 230, 599, 604, 611, 919) oder sie werden hergestellt durch Umsetzung von Anilinen mit Ameisensäure (vgl. Houben-Weyl, Band 8, S. 654 (1952) Stuttgart). Beispielsweise erhält man durch Umsetzen von 2-Fluoranilin mit Ameisensäure das 2-Fluorformanilid gemäß der

folgenden Vorschrift: 55,5 g 2-Fluoranilin wurden mit 75,5 ml Ameisensäure versetzt und 3 Stunden bei Rückflußtemperatur gerührt. Nach dem Abkühlen wurde des Reaktionsgemisch in 1 l Eiswasser eingerührt und der ausgefallene Niederschlag abgesaugt und getrocknet.

Es wurden 49 g 2-Fluorformanilid vom Schmelzpunkt 48—50°C erhalten.

Als Verdünnungsmittel bei der Herstellung der N-sulfenylierten Formanilide eignen sich beispielsweise Kohlenwasserstoffe z.B. n-Pentan, n-Hexan, Petroläther, Cyclohexan, Benzol, Toluol, Xylol oder andere organische Lösungsmittel, z.B. Chlorbenzol, Diäthyläther, Tetrahydrofuran, Dioxan, Chloroform, Methylenchlorid, Tetrachloräthan, Aceton, Diisopropylketon, Sulfolan, Dimethylsulfoxid oder Dimethylformamid oder entsprechende Gemische. Zweckmäßig verwendet man das Verdünnungsmittel in einer Menge von 100 bis 2000 Gewichtsprozent, vorzugsweise 100 bis 1000 Gewichtsprozent, bezogen auf die Ausgangsstoffe.

Als säurebindende Mittel lassen sich Alkalihydride oder -carbonate z.B. Natriumhydrid oder Natrium- oder Kaliumcarbonat oder tertiäre Amine verwenden beispielsweise Triäthylamin, N,N-Dimethylcyclohexylamin, N-Methylpiperidin, N,N-Dimethylanilin oder Pyridin. Das säurebindende Mittel wird beispielsweise in stöchiometrischer Menge oder im Überschuß, z.B. bis zu 50% verwendet. Das Sulfensäurehalogenid der Formel $ClSCCl_2X$ z.B. Trichlormethylsulfenylchlorid oder Fluordichlormethylsulfenylchlorid wird beispielsweise in stöchiometrischer Menge oder im Überschuß bis zu 50% zum Formanilid zugegeben.

Die Umsetzung wird beispielsweise bei einer Temperatur von 0 bis 100°C, vorzugsweise 0 bis 60°C durchgeführt, während 1/2 Stunde bis 120 Stunden, vorzugsweise während 1 Stunde bis 20 Stunden, drucklos oder unter Druck, kontinuierlich oder diskontinuierlich.

In einer bevorzugten Form der Herstellung werden ein gegebenenfalls substituiertes Formanilid und Trichlormethyl- bzw. Fluordichlormethylsulfenylchlorid äquimolar in beliebiger Reihenfolge in einem Verdünnungsmittel vermischt. Dann wird die äquimolare Menge des säurebindenden Mittels zugegeben und die Reaktion während einer Stunde bis 20 Stunden bei 0 bis 60°C durchgeführt.

Zur Isolierung der neuen Stoffe wäscht man das Reaktionsgemisch mit Wasser, um die entstandenen Salze zu entfernen. Nach dem Einengen im Vakuum fällt das Reaktionsprodukt im allgemeinen hinreichend sauber an, es kann aber auch nach bekannten Methoden der Umkristallisation, Extraktion oder Chromatographie weiter gereinigt werden.

Folgendes Beispiel illustriert die Herstellung der neuen Substanz:

Beispiel 1 (Verbindung Nr. 3)

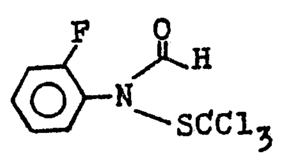

19,5 g 2-Fluorformanilid wurden in 200 ml Cyclohexan vorgelegt und bei Raumtemperatur mit 39 g Trichlormethylsulfenylchlorid vermischt. Unter Rühren wurden dann 22 ml Triäthylamin zugetropft, wobei die Temperatur auf 40°C anstieg. Nach dem Rühren über Nacht bei Raumtemperatur wurde das Reaktionsgemisch dreimal mit Wasser gewaschen, getrocknet und eingeengt.

Nach dem Umkristallisieren des Rückstandes aus Isopropanol wurden 20 g weiß kristallines N-(Trichlormethylsulfenyl)-2-fluorformanilid vom Schmelzpunkt 43 bis 46°C erhalten.

Die Charakterisierung des Produktes erfolgte durch UR-Spektroskopie, [1]H-Kernresonanzspektroskopie und Elementaranalyse.

Entsprechend wurden folgende Substanzen hergestellt.

| Nr. | $R^1$ | $R^2$ | $R^3$ | $R^4$ | $R^5$ | X | Fp [°C] bzw. $n_D^{20}$ |
|---|---|---|---|---|---|---|---|
| 1 | H | H | H | H | H | Cl | 64—66 |
| 2 | H | H | H | H | H | F | 50—55 |
| 3 | F | H | H | H | H | Cl | 43—46 |
| 4 | F | H | H | H | H | F | Öl |
| 5 | H | H | F | H | H | Cl | Öl |
| 6 | H | H | F | H | H | F | 51—54 |
| 7 | Cl | H | H | H | H | Cl | 56—58 |
| 8 | Cl | H | H | H | H | F | 1.5658 |
| 9 | H | Cl | H | H | H | Cl | 68—70 |
| 10 | H | Cl | H | H | H | F | 1.5679 |
| 11 | H | H | Cl | H | H | Cl | 76—78 |
| 12 | H | H | Cl | H | H | F | 50 |
| 13 | H | Cl | H | Cl | H | Cl | 85—90 |
| 14 | H | CL | H | Cl | H | F | 64 |
| 15 | Cl | H | Cl | Cl | H | Cl | 1.5788 |
| 16 | Cl | H | Cl | Cl | H | F | 1.5753 |
| 17 | Br | H | Br | H | H | Cl | 1.6024 |
| 18 | Br | H | Br | H | H | F | Wachs |
| 19 | H | J | H | H | H | Cl | 62—65 |
| 20 | H | J | H | H | H | F | 1.5610 |
| 21 | $CH_3$ | H | Cl | H | H | Cl | 1.4990 |
| 22 | $CH_3$ | H | Cl | H | H | F | 1.5575 |
| 23 | $CH_3$ | H | H | H | H | Cl | 58—60 |
| 24 | $CH_3$ | H | H | H | H | F | 1.5580 |
| 25 | $CH_3$ | H | H | H | $CH_3$ | Cl | 1.5800 |
| 26 | $CH_3$ | H | H | H | $CH_3$ | F | 1.5534 |
| 27 | H | $NO_2$ | H | H | H | Cl | 1.5960 |
| 28 | H | $NO_2$ | H | H | H | F | 1.5732 |
| 29 | H | $CF_3$ | H | H | H | Cl | 75—76 |
| 30 | H | $CF_3$ | H | H | H | F | 61—63 |
| 31 | H | H | $CF_3$ | H | H | Cl | 42 |

| Nr. | $R^1$ | $R^2$ | $R^3$ | $R^4$ | $R^5$ | X | FP [°C] bzw. $n_D^{20}$ |
|---|---|---|---|---|---|---|---|
| 32 | H | H | $CF_3$ | H | H | F | 42 |
| 33 | H | $CF_3$ | H | $CF_3$ | H | Cl | 1.4908 |
| 34 | H | $CF_3$ | H | $CF_3$ | H | F | 1.4739 |
| 35 | H | $OC_2HF_4$ | H | H | H | Cl | 1.5070 |
| 36 | H | $OC_2HF_4$ | H | H | H | F | 1.4982 |
| 37 | H | i-$C_3H_7$ | H | H | H | Cl | 1.5610 |
| 38 | H | i-$C_3H_7$ | H | H | H | F | 1.5359 |
| 39 | Cl | H | H | $CF_3$ | H | Cl | 1.532 |
| 40 | Cl | H | H | $CF_3$ | H | F | 1.519 |
| 41 | $OCH_3$ | H | Cl | H | H | Cl | 117—122 |
| 42 | $OCH_3$ | H | Cl | H | H | F | 85—88 |
| 43 | H | H | $CO_2C_2H_5$ | H | H | Cl | Wachs |
| 44 | H | H | $CO_2C_2H_5$ | H | H | F | 1.5378 |
| 45 | F | H | H | H | F | Cl | 64—65 |
| 46 | F | H | H | H | F | F | 50—52 |
| 47 | H | Cl | F | H | H | Cl | 59—61 |
| 48 | H | Cl | F | H | H | F | Öl |
| 49 | H | $CO_2$-i-$C_3H_7$ | H | $CO_2$-i-$C_3H_7$ | H | Cl | 78—80 |
| 50 | H | $CO_2$-i-$C_3H_7$ | H | $CO_2$-i-$C_3H_7$ | H | F | 1,5088 |
| 51 | H | H | $CH_3$ | H | H | F | 56 |

Die neuen Wirkstoffe eignen sich in erster Linie zur Bekämpfung von phytopathogenen Bodenpilzen, beispielsweise Pythium-, Aphanomyces- und Fusarium-Arten, die Auflauf- und Keimlingskrankheiten beispielsweise an Leguminosen, Salat, Rüben, Baumwolle und anderen Kulturpflanzen hervorrufen können; auch sind sie geeignet zur Bekämpfung von Schimmelpilzen, z.B. Aspergillus- und Penicillium-Arten, die z.B. Blumenzwiebeln stark befallen und Fäulnis verursachen können.

Darüber hinaus eignen sich die neuen Wirkstoffe zum Schutz von verschiedenen Materialien (Werkstoffen) gegen den Abbau bzw. die Zerstörung durch Bakterien und Pilze. Materialien (Werkstoffe), die mit den neuen Wirkstoffen konserviert bzw. mikrozid ausgerüstet werden können, sind beispielsweise Anstrichfarben, Dichtungsmassen, Kunststoffe und Holz sowie Holzwerkstoffe; ferner sind die Verbindungen als Schleimbekämpfungsmittel in der Papierindustrie geeignet.

Folgende Mikroorganismen lassen sich beispielsweise mit den erfindungsgemäßen Verbindungen zum Schutz von Materialien (Werkstoffen) bekämpfen:
Chaetomium globosum, Aspergillus terreus, Aspergillus niger, Aspergillus versicolor, Penicillium glaucum, Pullularia pullulans, Sclerophoma pityophila, Phoma violacea, Staphylococcus aureus, Escherichia coli, Pseudomonas aeruginosa sowie Nostoc spec., Chlorella vulgaris und Scenedesmus quadricauda.

Die fungiziden Mittel enthalten 0,1 bis 95% (Gewichtsprozent) Wirkstoff, vorzugsweise 0,5 bis 90%. Die Aufwandmengen liegen je nach Art des gewünschten Effektes zwischen 0,001 und 3 kg oder mehr, vorzugsweise jedoch zwischen 0,01 und 1 kg Wirkstoff/ha.

Die Anwendung erfolgt z.B. in Form von direkt versprühbaren Lösungen, Pulvern, Suspensionen oder Dispersionen, Emulsionen, Oldispersionen, Pasten, Stäubemitteln, Streumitteln, Granulaten durch Versprühen, Vernebeln, Verstäuben, Verstreuen, Beizen oder Gießen. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteröle usw., sowie Öle pflanzlichen oder tierischen Ursprungs, aliphatische, cyclische und aromatische Kohlenwasserstoffe, zum Beispiel Benzol, Toluol, Xylol, Paraffin, Tetrahydronaphthalin, alkylierte Naphthaline oder deren Derivate zum Beispiel Methanol, Äthanol, Propanol, Butanol, Chloroform, Tetrachlorkohlenstoff, Cyclohexanol, Cyclohexanon, Chlorbenzol, Isophoron usw., stark polare Lösungsmittel, z.B. Dimethylformamid, Dimethylsulfoxid, N-Methylpyrrolidon, Wasser usw. in Betracht.

Wäßrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

An oberflächenaktiven Stoffen sind zu nennen:
Alkali-, Erdalkali-, Ammoniumsalze von Ligninsulfonsäure, Naphthalinsulfonsäuren, Phenolsulfonsäure, Alkylarylsulfonate, Alkylsulfonate, Alkali- und Erdalkalisalze, der Dibutylnaphthalinsulfonsäure, Lauryläthersulfat, Fettalkoholsulfate, fettsaure Alkali- und Erdalkalisalze, Salze sulfatierter Hexadecanole, heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylenoctylphenoläther, äthoxyliertes Isooctylphenol, -Octylphenol, -Nonylphenol, Alkylphenol-polyglykoläther, Tributylphenylpolyglykoläther, Alkylarylpolyätheralkohole, Isotridecylalkohol, Fettalkoholäthylenoxid-Kondensate, äthoxyliertes Rizinusöl, Polyoxyäthylenalkyläther, öthoxyliertes Polyoxypropylen, Laurylalkoholpolyglykolätheracetal, Sorbitester, Lignin, Sulfitablaugen und Methylcellulose.

Pulver, Streu- und Stäubemittel können durch Mischen oder gemeinsames Vermahlen der wirksamen Substanzen mit einem festen Trägerstoff hergestellt werden.

Granulate, z.B. Umhüllungs-, Imgrägnierungs- und Homogen-granulate, können durch Bindung der Wirkstoffe an feste Trägerstoffe hergestellt werden. Feste Trägerstoffe sind z.B. Mineralerden wie Silicagel, Kieselsäuren, Silikate, Talkum, Kaolin, Ton, Kalkstein, Kalk, Kreide, Talkum, Löß, Ton, Dolomit, Diatomeenerde, Calcium- und Magnesiumsulfat, gemahlene Kunststoffe, Düngemittel, wie z.B. Ammoniumsulfat, Ammoniumnitrat, Harnstoffe und pflanzliche Produkte. Wie Baumrinden-, Holz- und Nußschalenmehl, Cellulosepulver.

Bei der Anwendung der Wirkstoffe im Materialschutz, z.B. als Fungizide in Anstrichfarben, betragen die Aufwandmengen 0,5 bis 5% Wirkstoff, bezogen auf das Gesamtgewicht der zu konservierenden Farben. Die neuen Wirkstoffe können auch als fungizid wirksame Bestandteile öliger Holzschutzmittel zum Schutz von Holz gegen holzzerstörende oder holzverfärbende Pilze eingesetzt werden. Die Anwendung erfolgt in der Weise, daß man das Holz mit diesen Mitteln behandelt, beispielsweise tränkt oder anstreicht.

Die Wirkstoffe können auch mit anderen bekannten Fungiziden gemischt werden. In vielen Fällen erhält man dabei auch eine Vergrößerung des fungiziden Wirkungsspektrums.

Die folgende Liste von Fungiziden, mit denen die neuen Verbindungen kombiniert werden können, soll die Kombinationsmöglichkeiten erläutern nicht aber einschränken. Fungizide, die mit den neuen N-sulfenylierten Formaniliden kombiniert werden können, sind beispielsweise:

Ferridimethyldithiocarbamat,
Zinkdimethyldithiocarbamat,
Manganäthylenbisdithiocarbamat,
Mangan-zink-äthylendiamin-bis-dithiocarbamat,
Zinkäthylenbisdithiocarbamat,
Tetramethylthiuramdisulfid,
3,5-Dimethyl-1,3,5-2H-tetrahydrothiadiazin-2-thion,
Ammoniak-Komplex von Zink-(N,N'-äthylen)-bis-dithiocarbamat und N,N'-Polyäthylen-bis-(thiocarbamoyl)-disulfid,
Zink-(N,N'-propylen)-bis-dithiocarbamat,
Ammoniak-Komplex von Zink-(N,N-propylen-bis-dithiocarbamat) und N,N'-Polypropylen-bis-(thiocarbamoyl)-disulfid,
Dinitro-(1-methylheptyl)-phenyl-crotonat,
2-sec.-Butyl-4,6-dinitrophenyl-3,3-dimethylacrylat,
2-sec.-Butyl-4,6-dinitrophenylisopropylcarbonat,

2,4,5-Trichlorphenol,
Pentachlorphenol,
Barium-Salz von Pentachlorphenol,
Pentachlorphenyl-acetat,
Pentachlorbenzylalkohol,
Di-(5-chloro-2-hydroxyphenyl)-methan,
Phenyl-(5-chloro-2-hydroxyphenyl)-methan,
N-Trichlormethylthio-tetrahydrophthalimid,
N-Trichlormethylthio-phthalimid,
N-Fluordichlormethylthio-phthalimid,
N-(1,1,2,2-Tetrachoräthylthio)-tetrahydrophthalimid,
2-Heptadecyl-2-imidazolinacetat,
2,4-Dichlor-6-(o-chloranilino)-s-triazin,
Diäthylphthalimidophosphorothionat,
5-Amino-1-[bis-(dimethylamino)-phosphinyl]-3-phenyl-1,2,4-triazol,
5-Äthoxy-3-trichlormethyl-1,2,4-thiadiazol,
2,3-Dicyano-1,4-dithiaanthrachinon,
Chinoxalin-2,3-cycl.-trithiocarbonat,
1-(Butylcarbamoyl)-2-benzimidazol-carbaminsäuremethylester,
2-Methoxycarbonylamino-benzimidazol,
2-Rhodanmethylthio-benzthiazol,
4-(2-Chlorphenylhydrazono)-3-methyl-5-isoxazolon,
1-(1,2,4-Triazolyl-1')-[1-(4'-chlorphenoxy)]-3,3-dimethylbutan-2-on,
1-(1-Imidazoyl)-2-allyloxy-2-(2,4-dichlorphenyl)-äthan,
2-(0,0-Diäthyl-thionophosphoryl)-5-methyl-6-carbäthoxy-pryzolo-(1,5a)-pyrimidin,
Pyridin-2-thiol-1-oxid,
8-Hydroxychinolin bzw. dessen Kupfer-Salz,
5,5-Dimethyl-3-(3,5-dichlorphenyl)2,4-dioxo-1,3-oxazolidin,
5-Methyl-5-vinyl-3-(3,5-dichlorphenyl)-2,4-dioxo-1,3-oxazolidin,
2-[Furyl-(2)]-benzimidazol,
Piperazin-1,4-diyl-bis-1-(2,2,2-Trichlor-äthyl)-formamid,
2-[Thiazolyl-(4)]-benzimidazol,
5-Butyl-2-dimethylamino-4-hydroxy-6-methyl-pyrimidin,
Bis-(p-chlorphenyl)-3-pyridinmethanol,
1,2-Bis-(3-äthoxycarbonyl-2-thioureido)-benzol,
1,2-Bis-(3-methoxycarbonyl-1-thioureido)-benzol,
Dodecylguanidinacetat,
3-[2-(3,5-Dimethyl-2-oxycyclohexyl)-2-hydroxyäthyl]-glutarimid,
Hexachlorbenzol,
N-Dichlorfluoromethylthio-N',N'-dimethyl-N-phenyl-schwefelsäurediamid,
N-Dichlorfluoromethylthio-N-methyl-N'-methyl-N'-phenyl-schwefelsäurediamid,
2,4,5,6-Tetrachlor-isophthalonitril,
1-(3,4-Dichloranilino)-1-formylamino-2,2,2-trichloräthan,
2,6-Dimethyl-N-tridecyl-morpholin bzw. dessen Salze,
2,6-Dimethyl-N-cycododecyl-morpholin bzw. dessen Salze,
2,3-Dichlor-1,4-naphthochinon,
1,4-Dichlor-2,5-dimethoxybenzol,
p-Dimethylaminobenzol-diazonatriumsulfonat,
2-Chlor-1-nitro-propan,
Polychlornitrobenzole wie Pentachlornitrobenzol,
Methylisothiocyanat,
Triphenyl-zinn-acetat,
fungizide Antibiotika z.B. Griseofulvin oder Kasugamycin,
Mercaptobenzthiazol,
Methyl-N-(2,6-dimethylphenyl)-N-(2-furoyl)-alaninat,
Methyl-N-(2,6-dimethylphenyl)-N-(2-methoxyacetyl)-alaninat,
2-cyano-N-[(äthylamino)carbonyl]-2-(methoximino)-acetamid,
β-(4-Chlorphenoxy)-α-(1,1-dimethyl)-1H-1,2,4-triazol-1-äthanol,
Benzisothiazolon,
Tetrafluordichloraceton,
1-Phenylthiosemicarbazid,
Aluminiumkomplex des N'-Hydroxy-N-cyclohexyl-diazeniumoxids
und die entsprechenden Natrium- oder Kaliumkomplexe.
Bordeauxmischung,
nickelhaltige Verbindungen und Schwefel.

Die Zumischung dieser Mittel zu den erfindungsgemäßen Fungiziden kann im Gewichtsverhältnis 1:10 bis 10:1 erfolgen. Sie können gegebenenfalls auch erst unmittelbar vor der Anwendung (Tankmischung) zugesetzt werden.

Die folgenden Beispiele erläutern die fungizide Wirkung der neuen Verbindungen. Hierbei wurden diese mit den folgenden drei bekannten Wirkstoffen verglichen:

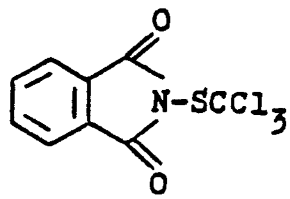
Wirkstoff A

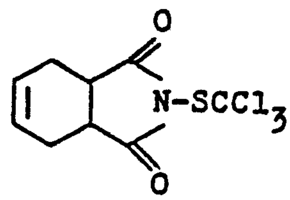
Wirkstoff B

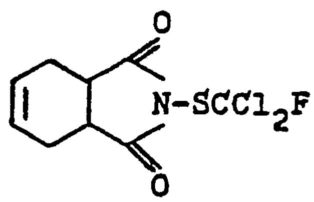
Wirkstoff C

Beispiel 2

Die Wirkstoffe werden einer für das Wachstum des Pilzes Aspergillus niger optimal geeigneten Nährlösung in Mengen von 100, 50, 25, 10, 5 und 1 Gewichtsteilen pro Million Teile Nährlösung zugesetzt. Es werden jeweils 20 ml der so behandelten Nährlösung in 100 ml Glaskolben mit 0,3 mg Aspergillus-Pilzsporen beimpft. Die Kolben werden 120 Stunden lang bei 36°C erwärmt und anschließend das Ausmaß der Pilzentwicklung, das bevorzugt auf der Nährlosungsoberfläche erfolgt, beurteilt.

O kein Pilzwachstum, abgestuft bis 5 ungehemmtes Pilzwachstum (Pilzdecke auf der Nährlösungsoberfläche geschlossen)

| Wirkstoff | Wirkstoffmenge in der Nährlösung ... Teile pro Million Teile Nährlösung | | | | | |
|---|---|---|---|---|---|---|
| | 100 | 50 | 25 | 10 | 5 | 1 |
| 4 | 0 | 0 | 0 | 0 | 0 | 0 |
| 6 | 0 | 0 | 0 | 0 | 0 | 0 |
| 8 | 0 | 0 | 0 | 0 | 0 | 0 |
| 10 | 0 | 0 | 0 | 0 | 0 | 0 |
| 12 | 0 | 0 | 0 | 0 | 1 | 2 |
| 26 | 0 | 0 | 0 | 0 | 0 | 1 |
| 28 | 0 | 0 | 0 | 0 | 0 | 1 |
| 30 | 0 | 0 | 0 | 0 | 0 | 0 |
| 32 | 0 | 0 | 0 | 0 | 0 | 3 |
| 34 | 0 | 0 | 0 | 0 | 2 | 4 |
| 46 | 0 | 0 | 0 | 0 | 0 | 0 |
| 48 | 0 | 0 | 0 | 0 | 0 | 0 |
| A (bekannt) | 0 | 0 | 2 | 4 | 4 | 5 |
| B (bekannt) | 0 | 1 | 3 | 4 | 4 | 5 |
| C (bekannt) | 0 | 0 | 0 | 1 | 3 | 4 |

Beispiel 3

100 g Proben Erbsensamen der Sorte "Senator" werden in Glasflaschen etwa 5 Minuten lang mit 300 mg (= 0,3 Gew.-%) Beizmittelaufbereitungen, die 40% Wirkstoff in der Trockensubstanz enthalten, sorgfältig geschüttelt. Danach werden jeweils 100 Samen in Saatkosten 3 cm Tief und mit einem Abstand von 3 bis 5 cm in eine Komposterde eingesät, die eine starke natürliche Verseuchung mit den Pilzen Pythium spec., Aphanomyces spec. und Fusarium oxysporum aufweist. Die Kästen werden im Gewächschaus bei Temperaturen von 17 bis 20°C aufgestellt. Nach einer Versuchsdauer von 21 Tagen wird die Anzahl gesunder Erbsenpflanzen ermittelt.

| Wirkstoff | ... % Gesunde Pflanzen nach 21 Tagen in Komposterde |
|---|---|
| 1 | 90 |
| 3 | 92 |
| 4 | 93 |
| 5 | 80 |
| 6 | 84 |
| 7 | 96 |
| 8 | 92 |
| 9 | 95 |
| 10 | 91 |
| 11 | 82 |
| 12 | 86 |
| 26 | 95 |
| 27 | 90 |
| 28 | 86 |
| 29 | 88 |
| 30 | 92 |
| 31 | 94 |
| 32 | 93 |
| 45 | 88 |
| 46 | 84 |
| 47 | 93 |
| 48 | 95 |
| B) (bekannt) | 65 |
| Kontrolle (unbehandelt) | 15 |
| Kontrolle sterilisierte Komposterde | 95 |

Beispiel 4

Filtrierpapierscheiben mit einem Durchmesser von 13 mm und einer Stärke von 1 mm werden mit 0,2 ml Lösungen getränkt, die jeweils 400 Teile Wirkstoff je Million Teile Lösung (ppm) enthalten. Die Scheiben werden dann auf einen 5%igen Malzextraktagar in Glasschalen mit Decke gelegt, die zuvor mit Sporen (Konidien) des Pilzes Pullularia pullulans beimpft wurden. Anschließend werden die Schalen 3 Tage lang bei 22 bis 24°C bebrütet. Nach dieser Zeit haben sich die Pilze in den Kontrollschalen sehr gut entwickelt; die fungizide Wirksamkeit der Wirkstoffe wird anhand der um die Filtrierpapierscheiben herum entstandenen pilzfreien Zonen (Hemmhöfe) wie folgt beurteilt:

— kein Hemmhof (keine fungizide Wirksamkeit)
+ kleiner Hemmhof kleiner als 1 mm (geringe fungizide Wirksamkeit)
++ mittlerer Hemmhof 1 bis 5 mm (gute fungizide Wirksamkeit)
+++ sehr großer Hemmhof größer als 5 mm (sehr gute fungizide Wirksamkeit)

| Wirkstoff | Beurteilung der fungiziden Wirksamkeit (Hemmhof-Beurteilung) |
|---|---|
| 1 | +++ |
| 2 | +++ |
| 4 | +++ |
| 5 | +++ |
| 6 | +++ |
| 7 | +++ |
| 8 | +++ |
| 9 | +++ |
| 10 | +++ |
| 11 | +++ |
| 12 | +++ |
| 25 | +++ |
| 26 | +++ |
| 27 | +++ |
| 28 | +++ |
| 29 | +++ |
| 30 | +++ |
| 31 | +++ |
| 32 | +++ |
| 33 | +++ |
| 34 | +++ |
| 45 | +++ |
| 46 | +++ |
| 47 | +++ |
| 48 | +++ |
| A) bekannt | ++ |
| B) bekannt | + |
| C) bekannt | ++ |
| Kontrolle (unbehandelt) | — |

Beispiel 5

Man vermischt 90 Gewichtsteile der Verbindung 1 mit 10 gewichtsteilen N-Methyl-$\alpha$-pyrrolidon und erhält eine Lösung, die zur Anwendung in Form kleinster Tropfen geeignet ist.

Beispiel 6

20 Gewichtsteile der Verbindung 2 werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-monoäthanolamid, 5 Gewichtsteilen Calciumsalz der Dodecylbenzolsulfonsäure und 5 Gewichtsteilen des Anlagerungsproduktes von 40 Mol Äthylenoxid an 1 Mol Ricinusöl besteht. Durch Ausgießen und feines Verteilen der Lösung in 100 000 Gewichtsteilen Wasser erhält man eine wäßrige Dispersion, die 0,02 Gewichtsprozent des Wirkstoffs enthält.

Beispiel 7

20 Gewichtsteile der Verbindung 1 werden in einer Mischung gelöst, die aus 25 Gewichtsteilen Cyclohexanol, 65 Gewichtsteilen einer Mineralölfraktion vom Siedepunkt 210 bis 280°C und 10 Gewichtsteilen des Anlagerungsproduktes von 40 Mol Äthylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

Beispiel 8

20 Gewichtsteile des Wirkstoffs 2 werden mit 3 Gewichtsteilen des Natriumsalzes der Diisobutylnaphthaalin-$\alpha$-sulfonsäure, 17 Gewichtsteilen des Natriumsalzes einer Ligninsulfonsäure aus einer Sulfit-Ablauge und 60 Gewichtsteilen pulverförmigem Kieselsäuregel gut vermischt und in einer Hammermühle vermahlen. Durch feines Verteilen der Mischung in 20 000 Gewichtsteilen Wasser erhält man eine Spritzbrühe, die 0,1 Gewichtsprozent des Wirkstoffs enthält.

Beispiel 9

3 Gewichtsteile der Verbindung 3 werden mit 97 Gewichtsteilen feinteiligem Kaolin innig vermischt. Man erhält auf diese Weise ein Stäubemittel, das 3 Gewichtsprozent des Wirkstoffs enthält.

Beispiel 10

30 Gewichtsteile der Verbindung 4 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufarbeitung des Wirkstoffs mit guter Haftfähigkeit.

Beispiel 11

40 Gewichtsteile des Wirkstoffs 1 werden mit 10 Teilen Natriumsalz eines Phenolsulfonsäureharnstoff-formaldehyd-Kondensats, 2 Teilen Kieselgel und 48 Teilen Wasser innig vermischt. Man erhält eine stabile wäßrige Dispersion. Durch Verdünnen mit 100 000 Gewichtsteilen Wasser erhält man eine wäßrige Dispersion, die 0,04 Gewichtsprozent Wirkstoff enthält.

Beispiel 12

20 Teile des Wirkstoffs 2 werden mit 2 Teilen Calciumsalz der Dodecylbenzolsulfonsäure, 8 Teilen Fettalkohol-polyglykoläther, 2 Teilen Natriumsalz eines Phenolsulfonsäure-hamstoff-formaldehyd-Kondensats und 68 Teilen eines paraffinishen Mineralöls innig vermischt. Man erhält eine stabile ölige Dispersion.

**Patentansprüche für des Vertragsstaaten BE, CH, DE, FR, GB, IT, LU, NL, SE**

1. N-sulfenylierte Formanilide der allgemeinen Formel

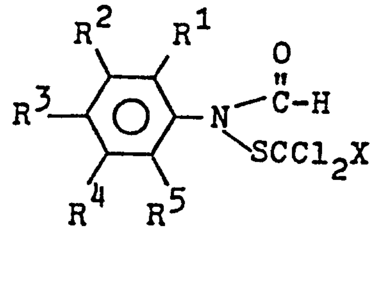

in welcher
X Fluor oder Chlor und
$R^1$, $R^2$, $R^3$, $R^4$ und $R^5$ unabhängig voneinander Wasserstoff, Halogen, die Nitrogruppe, eine geradkettige

oder verzweigte gegebenenfalls halogensubstituierte Alkyl- oder Alkoxygruppe mit 1 bis 4 C-Atomen oder den Rest —CN oder —$COR^6$ bedeuten, wobei $R^6$ einen geraden oder verzweigten Alkoxyrest mit 1 bis 6 C-Atomen oder einen Dialkylaminorest bedeutet, wobei die Alkylreste geradkettig oder verzweigt sein können und aus 1 bis 4 C-Atomen bestehen oder zusammen mit dem Stickstoffatom, dessen Substituenten sie sind, einen Ring bilden oder $R^6$ einen N-Alkyl- oder N-Arylaminorest bedeutet, wobei der Alkylrest 1 bis 4 C-Atome enthält und der Arylrest gegebenenfalls durch Halogen oder Alkyl substituiert ist.

2. Fungizid, enthaltend ein Formanilid gemäß Anspruch 1

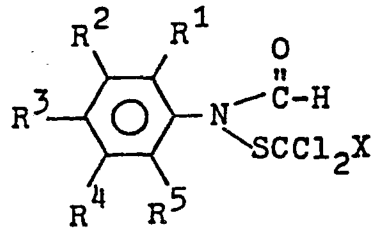

3. Verfahren zur Bekämpfung von Pilzen, dadurch gekennzeichnet, daß man die Pilze oder die vor Pilzebefall zu schützenden Gegenstände behandelt mit einem Formanilid gemäß Anspruch 1.

4. Verfahren zur Herstellung eines Formanilids gemäß Anspruch 1, dadurch gekennzeichnet, daß man ein Formanilid der allgemeinen Formel

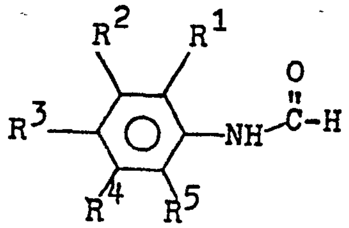

in welcher $R^1$, $R^2$, $R^3$, $R^4$ und $R^5$ die im Anspruch 1 angegebenen Bedeutungen haben, mit einer Verbindung der Formel $ClSCCl_2X$, in der X die im Anspruch 1 genannten Bedeutungen hat, bei einer Temperatur zwischen 0° und 100°C in Gegenwart eines säurebindenden Mittels gegebenenfalls in einem inerten organischen Verdünnungsmittel umsetzt.

5. N-(Trichlormethylsulfenyl)-2-fluorformanilid,
N-(Fluordichlormethylsulfenyl)-4-methylformanilid,
N-(Trichlormethylsulfenyl)-2,6-difluorformanilid,
N-(Fluordichlormethylsulfenyl)-2,6-difluorformanilid,
N-(Trichlormethylsulfenyl)-3-chlor-4-fluorformanilid,
N-(Fluordichlormethylsulfenyl)-3-chlor-4-fluorformanilid.

6. Fungizid, enthaltend als Formanilid
N-(Trichlormethylsulfenyl)-2-fluorformanilid,
N-(Fluordichlormethylsulfenyl)-4-methylformanilid,
N-(Trichlormethylsulfenyl)-2,6-difluorformanilid,
N-(Fluordichlormethylsulfenyl)-2,6-difluorformanilid,
N-(Trichlormethylsulfenyl)-3-chlor-4-fluorformanilid oder
N-(Fluordichlormethylsulfenyl)-3-chlor-4-fluorformanilid.

**Revendications pour les Etats Contractants: BE, CH, DE, FR, GB, IT, LU, NL, SE**

1. Formanilides N-sulfényles de formule générale

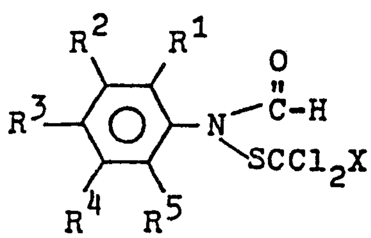

dans laquelle
X représente fluor ou chlore et
$R^1$, $R^2$, $R^3$, $R^4$ et $R^5$ représentent indépendamment les uns des autres, hydrogène, halogène, le groupe nitro, un groupe alkyle ou alcoxy en $C_1$ à $C_4$, à chaîne droite ou ramifiée éventuellement substitué par un halogène, ou le reste —CN ou —$COR^6$, $R^6$ représentant un reste alcoxy en $C_1$ à $C_6$ à chaîne droite ou ramifiée, ou un reste dialkylamino, les restes alkyle pouvant être à chaîne droite ou ramifiée et comportant 1 à 4 atomes de carbone ou formant un cycle avec l'atome d'azote dont ils sont les substituants, ou $R^6$ représente un reste N-alkyle ou N-arylamino, le reste alkyle contenant 1 à 4 atomes C et le reste aryle étant éventuellement substitué par un halogène ou alkyle.

2. Fongicide contenant un formanilide selon la revendication 1.

3. Procédé de lutte contre les champignons, caractérisé par le fait qu'on traite les champignons ou les objets à protéger contre l'attaque de champignons avec un formanilide selon la revendication 1.

4. Procédé de préparation d'un formanilide selon la revendication 1, caractérisé par le fait qu'on fait réagir, à une température comprise entre 0° et 100°C, en présence d'un agent liant les acides, éventuellement dans un diluant organique inerte, un formanilide de formule générale

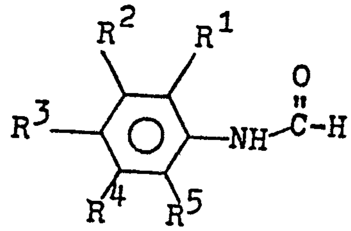

dans laquelle $R^1$, $R^2$, $R^3$, $R^4$ et $R^5$ ont les significations données dans la revendication 1, avec un composé de formule $ClSCCl_2X$, dans laquelle X a la signification indiquée dans la revendication 1.

5. N-(trichlorométhylsulfényl)-2-fluoroformanilide,
N-(fluorodichlorométhylsulfényl)-4-méthylformanilide,
N-(trichlorométhylsulfényl)-2,6-difluoroformanilide,
N-(fluorodichlorométhylsulfényl)-2,6-difluoroformanilide,
N-(trichlorométhylsulfényl)-3-chloro-4-fluoroformanilide,
N-(fluorodichlorométhylsulfényl)-3-chloro-4-fluoroformanilide.

6. Fongicide contenant comme formanilide:
N-(trichlorométhylsulfényl)-2-fluoroformanilide,
N-(fluorodichlorométhylsulfényl)-4-méthylformanilide,
N-(trichlorométhylsulfényl)-2,6-difluoroformanilide,
N-(fluorodichlorométhylsulfényl)-2,6-difluoroformanilide,
N-(trichlorométhylsulfényl)-3-chloro-4-fluoroformanilide, ou
N-(fluorodichlorométhylsulfényl)-3-chloro-4-fluoroformanilide.

**Claims for the Contracting States: BE, CH, DE, FR, GB, IT, LU, NL, SE**

1. An N-sulfenylated formanilide of the general formula

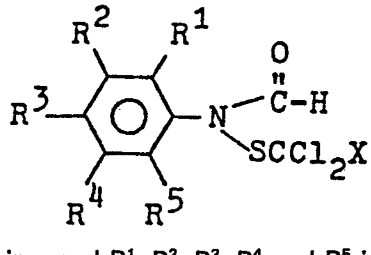

where X denotes fluorine or chlorine, and $R^1$, $R^2$, $R^3$, $R^4$ and $R^5$ independently of one another denote hydrogen, halogen, nitro, linear or branched, unsubstituted or halogen-substituted alkyl or alkoxy of 1 to 4 carbon atoms, or —CN or —$COR^6$, $R^6$ denoting linear or branched alkoxy of 1 to 6 carbon atoms or dialkylamino, the alkyls being linear or branched and of 1 to 4 carbon atoms, or forming, together with the nitrogen atom whose substituents they are, a ring, or $R^6$ denoting N-alkylamino or N-arylamino, alkyl being of from 1 to 4 carbon atoms and aryl being unsubstituted or substituted by halogen or alkyl.

2. A fungicide containing a formanilide as claimed in claim 1.

3. A process for combating fungi, characterized in that the fungi or the objects to be protected against fungus attack are treated with a formanilide as claimed in claim 1.

4. A process for the production of a formanilide as claimed in claim 1, characterized in that a formanilide of the general formula

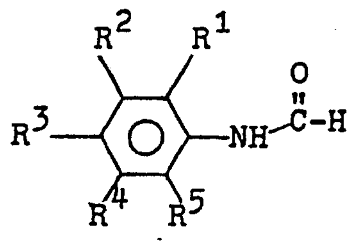

where $R^1$, $R^2$, $R^3$, $R^4$ and $R^5$ have the meanings given in claim 1, is reacted with a compound of the formula $ClSCCl_2X$, where X has the meanings given in claim 1, at from 0° to 100°C in the presence of an acid binder and, if desired, in an inert organic diluent.

5. N - (trichloromethylsulfenyl) - 2 - fluoroformanilide, N - (fluorodichloromethylsulfenyl) - 4 - methylformanilide, N - (trichloromethylsulfenyl) - 2,6 - difluoroformanilide, N - (fluorodichloromethylsulfenyl) - 2,6 - difluoroformanilide, N - (trichloromethylsulfenyl) - 3 - chloro - 4 - fluoroformanilide, and N - (fluorodichloromethylsulfenyl) - 3 - chloro - 4 - fluoroformanilide.

6. A fungicide containing N - (trichloromethylsulfenyl) - 2 - fluoroformanilide, N - (fluorodichloromethylsulfenyl) - 4 - methylformanilide, N - (trichloromethylsulfenyl) - 2,6 - difluoroformanilide, N - (fluorodichloromethylsulfenyl) - 2,6 - difluoroformanilide, N - (trichloromethylsulfenyl) - 3 - chloro - 4 - fluoroformanilide or N - (fluorodichloromethylsulfenyl) - 3 - chloro - 4 - fluoroformanilide as formanilide.

**Patentansprüche für den Vertragsstaat AT**

1. Fungizid, enthaltend ein Formanilid der Formel

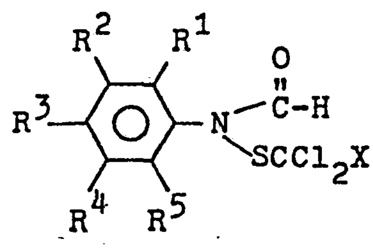

in welcher
X Fluor oder Chlor und,
$R^1$, $R^2$, $R^3$, $R^4$ und $R^5$ unabhängig voneinander Wasserstoff, Halogen, die Nitrogruppe, eine geradkettige oder verzweigte gegebenenfalls halogensubstituierte Alkyl- oder Alkoxygruppe mit 1 bis 4 C-Atomen oder den Rest —CN oder —$COR^6$ bedeuten, wobei $R^6$ einen geraden oder verzweigten Alkoxyrest mit 1 bis 6 C-Atomen oder einen Dialkylaminorest bedeutet, wobei die Alkylreste geradkettig oder verzweigt sein können und aus 1 bis 4 C-Atomen bestehen oder zusammen mit dem Stickstoffatom, dessen Substituenten sid sind, einen Ring bilden oder $R^6$ einen N-Alkyl- oder N-Arylaminorest bedeutet, wobei der Alkylrest 1 bis 4 C-Atome enthält und der Arylrest gegebenenfalls durch Halogen oder Alkyl substituiert ist.

2. Verfahren zur Bekämpfung von Pilzen, dadurch gekennzeichnet, daß man die Pilze oder die vor Pilzbefall zu schützenden Gegenstände behandelt mit einem fungizid gemäß Anspruch 1.

3. Verfahren zur Herstellung eines Formanilids für ein Fungizid gemäß Anspruch 1, dadurch gekennzeichnet, daß man ein Formanilid der allgemeinen Formel

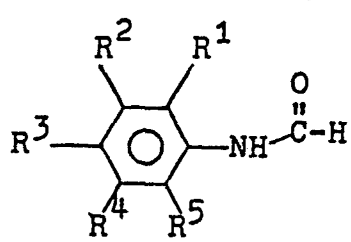

in welcher $R^1$, $R^2$, $R^3$, $R^4$ und $R^5$ die im Anspruch 1 angegebenen Bedeutungen haben, mit einer Verbindung der Formel $ClSCCl_2X$, in der X die im Anspruch 1 genannten Bedeutungen hat, bei einer Temperatur zwischen 0°C und 100°C in Gegenwart eines säurebindenden Mittels gegebenenfalls in einem inerten organischen Verdünnungsmittel umsetzt.

4. Fungizid, enthaltend als Formanilid
N-(Trichlormethylsulfenyl)-2-fluorformanilid,
N-(Fluordichlormethylsulfenyl)-4-methylformanilid,

N-(Trichlormethylsulfenyl)-2,6-difluorformanilid,
N-(Fluordichlormethylsulfenyl)-2,6-difluorformanilid,
N-(Trichlormethylsulfenyl)-3-chlor-4-fluorformanilid,
N-(Fluordichlormethylsulfenyl)-3-chlor-4-fluorformanilid.

**Revendications pour l'Etat Contractant AT**

1. Fongicide contenant un formanilide de formule

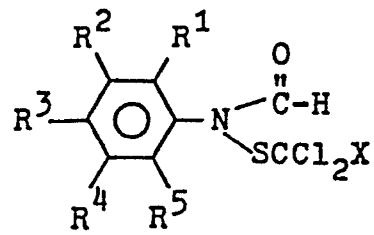

dans laquelle
X représente fluor ou chlore et
$R^1$, $R^2$, $R^3$, $R^4$ et $R^5$ représentent indépendamment les uns des autres, hydrogène, halogène, le groupe nitro, un groupe alkyle ou alcoxy en $C_1$ à $C_4$, à chaîne droite ou ramifiée éventuellement substitué par un halogène, ou le reste —CN ou —$COR^6$, $R^6$ représentant un reste alcoxy en $C_1$ à $C_6$ à chaîne droite ou ramifiée, ou un reste dialkylamino, les restes alkyle pouvant être à chaîne droite ou ramifiée et comportant 1 à 4 atomes de carbone ou formant un cycle avec l'atome d'azote dont ils sont les substituants, ou $R^6$ représente un reste N-alkyle ou N-arylamino, le reste alkyle contenant 1 à 4 atomes C et le reste aryle étant éventuellement substitué par un halogène ou alkyle.

2. Procédé de lutte contre les champignons, caractérisé par le fait qu'on traite les champignons ou les objets à protéger contre l'attaque de champignons avec un formanilide selon la revendication 1.

3. Procédé de préparation d'un formanilide pour un fongicide selon la revendication 1, caractérisé par la fait qu'on fait réagir, à une température comprise entre 0° et 100°C, en présence d'un agent liant les acides, éventuellement dans un diluant organique inerte, un formanilide de formule générale

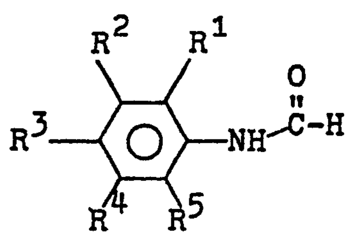

dans laquelle
$R^1$, $R^2$, $R^3$, $R^4$ et $R^5$ ont les significations données dans la revendication 1, avec un composé de formule $ClSCCl_2X$, dans laquelle X a la signification indiquée dans la revendication 1.

4. Fongicide contenant comme formanilide:
N-(trichlorométhylsulfényl)-2-fluoroformanilide,
N-(fluorodichlorométhylsulfényl)-4-méthylformanilide,
N-(trichlorométhylsulfényl)-2,6-difluoroformanilide,
N-(fluorodichlorométhylsulfényl)-2,6-difluoroformanilide,
N-(trichlorométhylsulfényl)-3-chloro-4-fluoroformanilide, ou
N-(fluorodichlorométhylsulfényl)-3-chloro-4-fluoroformanilide.

**Claims for the Contracting State AT**

1. A fungicide containing a formanilide of the formula

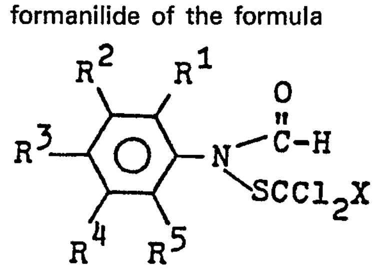

where X denotes fluorine or chlorine, and $R^1$, $R^2$, $R^3$, $R^4$ and $R^5$ independently of one another denote hydrogen, halogen, nitro, linear or branched, unsubstituted or halogen-substituted alkyl or alkoxy of 1 to 4 carbon atoms, or —CN or —$COR^6$, $R^6$ denoting linear or branched alkoxy of 1 to 6 carbon atoms or dialkylamino, the alkyls being linear or branched and of 1 to 4 carbon atoms, or forming, together with the nitrogen atom whose substituents they are, a ring, or $R^6$ denoting N-alkylamino or N-arylamino, alkyl being of from 1 to 4 carbon atoms and aryl being unsubstituted or substituted by halogen or alkyl.

2. A process for combating fungi, characterized in that the fungi or the objects to be protected against fungus attack are treated with a fungicide as claimed in claim 1.

3. A process for the production of a formanilide for a fungicide as claimed in claim 1, characterized in that a formanilide of the general formula

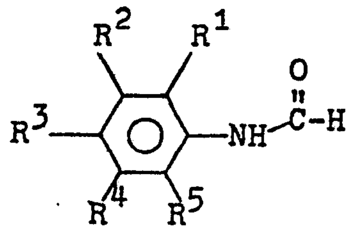

where $R^1$, $R^2$, $R^3$, $R^4$ and $R^5$ have the meanings given in claim 1, is reacted with a compound of the formula $ClSCCl_2X$, where X has the meanings given in claim 1, at from 0° to 100°C in the presence of an acid binder and, if desired, in an inert organic diluent.

4. A fungicide containing N - (trichloromethylsulfenyl) - 2 - fluoroformanilide, N - (fluorodichloromethylsulfenyl) - 4 - methylformanilide, N - (trichloromethylsulfenyl) - 2,6 - difluoroformanilide, N - (fluorodichloromethylsulfenyl( - 2,6 - difluoroformanilide, N - (trichloromethylsulfenyl) - 3 - chloro - 4 - fluoroformanilide or N - (fluorodichloromethylsulfenyl) - 3 - chloro - 4 - fluoroformanilide as formanilide.